# EUROPÄISCHE PATENTSCHRIFT

(11) **EP 1 893 881 B1**
(45) Veröffentlichungstag und Bekanntmachung des Hinweises auf die Patenterteilung: **27.12.2017**
(21) Anmeldenummer: 06754353.8
(22) Anmeldetag: 14.06.2006
(51) Int. Cl.: F16D 55/22

(54) **BREMSVORRICHTUNG**
BRAKING DEVICE
DISPOSITIF DE FREINAGE

(30) Priorität: 16.06.2005 DE 102005027917
(43) Veröffentlichungstag der Anmeldung: 05.03.2008
(73) Patentinhaber: KNORR-BREMSE Systeme für Nutzfahrzeuge GmbH, 80809 München (DE)
(72) Erfinder: GRUBER, Robert, 82140 Olching (DE); MACKE, Wlodzimierz, 82140 Olching (DE)
(74) Vertreter: Mattusch, Gundula
(86) Internationale Anmeldenummer: PCT/EP2006/005707
(87) Internationale Veröffentlichungsnummer: WO 2006/133916

(56) Entgegenhaltungen:
- WO-A-2006/007892
- US-A- 3 612 226
- US-A- 3 616 879
- US-A- 3 625 314
- US-A- 3 782 509
- US-A- 3 907 081
- US-A- 4 068 743
- US-A- 5 735 368

## Beschreibung

Die vorliegende Erfindung betrifft eine Bremsvorrichtung gemäß dem Oberbegriff des Anspruchs 1.

Scheibenbremsen, insbesondere für Nutzfahrzeuge, werden jeweils an einem fest mit einer Radachse verbundenen Anschlusskörper dadurch befestigt, dass ein Befestigungsflansch des Bremssattels oder eines Bremsträgers der Scheibenbremse mit dem Anschlusskörper verschraubt wird, wobei die Verschraubung mittels axial ausgerichteter Schrauben, also quer zur Drehrichtung des Fahrzeugrades verlaufend erfolgt.

Dabei wirken die Bremskräfte parallel zu einer Trennfuge zwischen dem Befestigungsflansch und dem Anschlusskörper und müssen durch die Schraubverbindungen aufgenommen werden, die jeweils aus einer Durchgangsbohrung, einer Gewindebohrung sowie einer Schraube bestehen, wobei die Durchgangsbohrung im Anschlusskörper oder Befestigungsflansch vorgesehen sein kann und die Gewindebohrung in dem anderen zugeordneten Bauteil.

Eine vergleichbare Brernsvorrichtung ist in der US 3 616 879 A offenbart, bei der die Verschraubung einerseits mittels einer axial ausgerichteten Schraube und andererseits durch eine tangential verlaufende Schraube erfolgt.

Zur Durchführung der Schraube muss der Durchmesser der Durchgangsbohrung größer sein als der Schaftdurchmesser der Schraube. Dies führt insbesondere bei hohen Bremsmomenten, die durch den Reibschluss zwischen dem Anschlusskörper und dem Befestigungsflansch nicht übertragen werden, zu einer Relativbewegung des die Durchgangsbohrung aufweisenden Bauteils gegenüber dem anderen, bis die Leibung der Durchgangsbohrung am Schraubenschaft zur Anlage kommt. Hierdurch werden die Schrauben in erheblichem Maße auf Abscheren beansprucht, was eine entsprechende Querschnittsdimensionierung erforderlich macht, die einer kostengünstigen Montage sowie einer gewichtsoptimierten Bauweise entgegensteht.

Aufgrund des vielfach nur geringen Bauraumes in der Achse können entsprechend große Schrauben nicht eingesetzt werden, so dass der erforderliche Reibschluss nicht ausreicht, um das Bremsmoment zu übertragen. In diesen Fällen müssen die Schraubverbindungen durch Einsatz von Passschrauben ergänzt werden, was nur mit erheblichen Fertigungskosten zu realisieren ist. Überdies ist aufgrund von Fertigungstoleranzen der Einsatz von lediglich nur einer Passschraube möglich, so dass diese Maßnahme nur eine begrenzte Lösung darstellt. Eine andere Möglichkeit den Bremssattel bzw. einen Bremsträger mit dem Anschlusskörper zu verbinden stellt die sogenannte Tangentialanbindung dar. Hierbei werden die Umfangskräfte zum Teil durch Reibschluss, zum Teil durch Formschluss übertragen, wobei allerdings wegen des ungünstigen Winkels der Trennfuge nur ein relativ kleiner Teil der Bremskraft übertragen wird. Eine solche Bremsvorrichtung ist aus der US 4 068 743 bekannt.

Darüber hinaus ist bei dieser konstruktiven Lösung die axiale Positionierung der Bremse problematisch. Damit die Verbindungsschrauben montierbar sind, müssen Fertigungstoleranzen hinsichtlich der Abstände zwischen den Bohrungen sowie Positionstoleranzen durch entsprechend große Aufnahmebohrungen ausgeglichen werden. Dies führt jedoch zu einer deutlich verschlechterten Positionierung der Bremse, was insbesondere in axialer Richtung nachteilig ist. Der Abstand der Bremsscheibe zu einem Trägerschaft muss entsprechend groß gestaltet sein. Überdies ist die Montage nur unter Zuhilfenahme entsprechender Werkzeuge wie Lehren oder Positionierungshilfen möglich.

Weiter sind Bremsvorrichtungen bekannt, bei denen der Befestigungsflansch formschlüssig in den Anschlusskörper eingefügt ist und sich in Umfangsrichtung an diesem abstützt.

Die US 3782509 offenbart eine Bremsvorrichtung gemäß dem Oberbegriff des Anspruchs 1.

Nachteilig sind hier die einzuhaltenden Toleranzen, die relativ hohe Herstellungs- und Montagekosten zur Folge haben.

Der vorliegenden Erfindung liegt die Aufgabe zugrunde, eine Bremsvorrichtung der gattungsgemäßen Art so weiter zu entwickeln, dass eine Optimierung der Abstützung des Befestigungsflansches am Anschlusskörper und gleichzeitig eine exakte Positionierung der Bremse möglich ist.

Diese Aufgabe wird durch eine Bremsvorrichtung mit den Merkmalen des Anspruchs 1 gelöst.

Durch diese konstruktive Ausbildung werden die Vorteile der umfänglichen Abstützung des Befestigungsflansches, insbesondere hinsichtlich der Möglichkeit sehr hohe Bremskräfte aufzunehmen, mit den Vorteilen der axialen Befestigung kombiniert, wodurch es möglicht ist, den Befestigungsflansch ohne Einhaltung der sehr geringen Toleranzen herzustellen und zu montieren.

Vielmehr können auftretende Toleranzen innerhalb der Durchmesserunterschiede Durchgangsbohrung/Schraubenschaft bei der Axialanbindung ausgeglichen werden. Insbesondere dann, wenn der Formschluss so ausgebildet ist, dass die Abstützflächen des Befestigungsflansches einerseits und des Anschlusskörpers andererseits radial ausgerichtet sind, also schräg verlaufend zur Mittelachse, da hierbei das Toleranzproblem durch die Winkeltoleranzen des Anschlusskörpers und des Befestigungsflansches verschärft werden.

Aufgrund der möglichen kompakten Bauweise im Bereich des Formschlussanschlusses wird diese Seite sinnvollerweise dort angeordnet, wo der Bauraum beschränkt ist, bevorzugt auslaufseitig. Dem entsprechend wird dann die kraftschlüssige Anbindung an der Seite erfolgen, die bauraumseitig nicht so begrenzt ist, so dass eine entsprechende Dimensionierung der Schrauben bzw. der Schraubenabstände möglich ist.

In jedem Fall sind auch sehr hohe Bremskräfte übertragbar, was insofern von besonderem Vorteil ist, als zukünftig aufgrund eines höheren zulässigen Gesamtgewichts von Nutzfahrzeugen die auftretenden Bremsmomente und damit die abzustützenden Kräfte im Vergleich zu heutigen Konstruktionen steigen werden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Die einzige Figur zeigt einen Befestigungsflansch nach der Erfindung in unterschiedlichen Ansichten, und zwar a) in einer Vorderansicht, b) einer Unteransicht und c) einer Draufsicht.

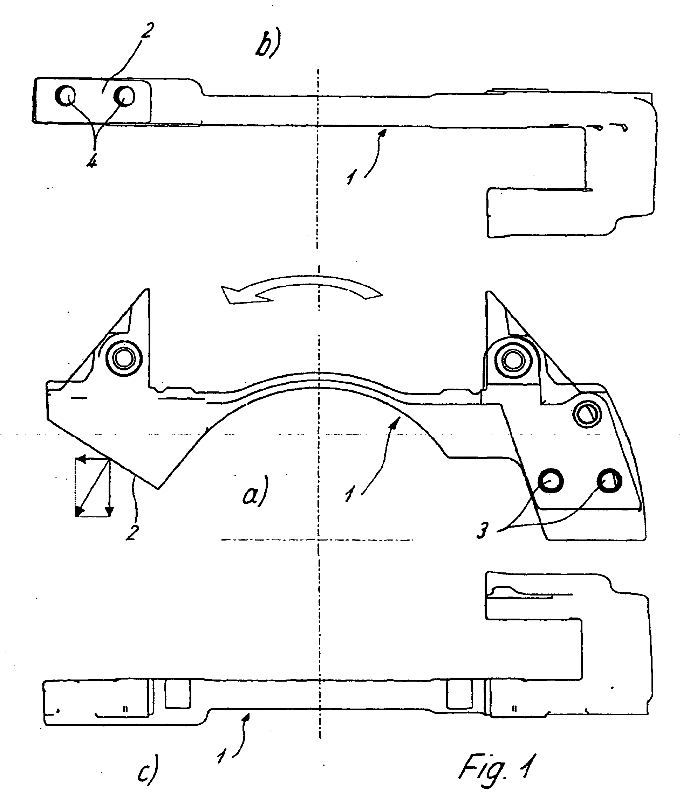

In der Figur 1 ist ein Befestigungsflansch einer Bremsvorrichtung dargestellt, an dem ein nicht gezeigter Anschlusskörper befestigbar ist, der an einer Radachse eines Kraftfahrzeuges anschließbar ist.

Der Befestigungsflansch, der insgesamt mit dem Bezugszeichen 1 versehen ist, ist Bestandteil eines ebenfalls nicht dargestellten Bremssattels oder eines Bremsträgers einer Scheibenbremse.

Der Befestigungsflansch 1 liegt an einer Seite in radialer Richtung formschlüssig am Anschlusskörper an, wozu im vorliegenden Ausführungsbeispiel eine radial oder etwa radial zur Radachse verlaufende Schräge 2 vorgesehen ist, die an eine daran angepasste Andruckfläche des Anschlusskörpers anpressbar ist. Diese Schräge 2 ist in Drehrichtung, entsprechend dem Pfeil, auslaufseitig vorgesehen, da hier üblicherweise der geringste Bauraum vorhanden ist.

Die andere Seite des Befestigungsflansches 1 wird in axialer Richtung kraftschlüssig am Anschlusskörper befestigt und zwar mittels Schrauben, die durch Durchgangsbohrungen 3 des Befestigungsflansches 1 gerührt sind und in Gewindebohrungen des Anschlusskörpers eingedreht sind.

Zur Festlegung des Befestigungsflansches 1 auch im linksseitig dargesellten Formschlussbereich sind ebenfalls Durchgangsbohrungen 4 vorgesehen, durch die Befestigungsschrauben führbar, die in den Anschlusskörper eingreifen.

Der Neigungswinkel der Schräge 2 ist entsprechend den auftretenden Kräften zu optimieren.

Prinzipiell, und nicht gemäß der Erfindung, besteht auch die Möglichkeit, den Formschluss durch Anlageflächen zu erreichen, die nicht, wie bei der Erfindung, schräg verlaufen, sondern senkrecht.

## Patentansprüche

1. Bremsvorrichtung mit einem an einer Radachse eines Kraftfahrzeuges befestigten Anschlusskörper und einem daran angeschlossenen Befestigungsflansch (1) eines Bremssattels oder eines Bremsträgers einer Scheibenbremse, **dadurch gekennzeichnet, dass** der Befestigungsflansch (1) auslaufseitig in Umfangsrichtung formschlüssig am Anschlusskörper anliegt und an der anderen Seite in axialer Richtung kraftschlüssig durch durchgeführte und in den Anschlusskörper eingedrehte Schrauben am Anschlusskörper befestigt ist, wobei der Formschluss durch eine am Befestigungsflansch (1) vorgesehene, radial zur Radachse verlaufende Schräge (2) und eine Anlageschräge des Anschlusskörpers hergestellt ist.

2. Bremsvorrichtung nach Anspruch 1, **dadurch gekennzeichnet, dass** der Befestigungsflansch (1) im Bereich des Formschlusses durch durchgeführte und in den Anschlusskörper eingedrehte Schrauben gehalten ist.

## Claims

1. Braking device comprising a connecting body secured to a wheel axle of a motor vehicle and, connected thereto, a mounting flange (1) of a brake calliper or an adapter of a disc brake, **characterised in that** the mounting flange (1) is in positive contact with the connecting body on the outgoing side in the circumferential direction and secured to the connecting body on the other side non-positively in the axial direction by screws passing through and tightened into the connecting body, the positive engagement being provided by a chamfer (2) provided on the mounting flange (1) and extending radially in respect to the wheel axis and by a contact chamfer of the connecting body.

2. Braking device according to claim 1, **characterised in that** the mounting flange (1) is held in the region of the positive engagement by screws passing through and tightened into the connecting body.

## Revendications

1. Dispositif de freinage comprenant un corps de raccordement fixé à un essieu d'un véhicule automobile et, y étant raccordée, une bride (1) de fixation d'un étrier de frein ou d'un support d'un frein à disque,
**caractérisé en ce que** la bride (1) de fixation s'applique au corps de raccordement à complémentarité de forme, dans la direction périphérique du côté de la sortie, et est fixée au corps de raccordement de l'autre côté, dans la direction axiale, à coopération de force, par des vis traversantes et posées dans le corps de raccordement, la complémentarité de forme étant produite par un biseau (2) prévu sur la bride (1) de fixation et s'étendant radialement par rapport à l'essieu, et par un biseau d'application du corps de raccordement.

2. Dispositif de freinage suivant la revendication 1,
**caractérisé en ce que** la bride (1) de fixation est maintenue dans la partie de la complémentarité de forme par des vis traversantes et posées dans le corps de raccordement.
